**Europäisches Patentamt**

**European Patent Office**

**Office européen des brevets**

(19)

(11) Veröffentlichungsnummer: **0 022 752**
**B1**

(12)
# EUROPÄISCHE PATENTSCHRIFT

(45) Veröffentlichungstag der Patentschrift:
**18.05.83**

(21) Anmeldenummer: **80810225.5**

(22) Anmeldetag: **11.07.80**

(51) Int. Cl.³: **C 08 L  67/02,** C 08 K  7/14,
C 08 J  5/04, H 01 B  3/42

(54) **Glasfaserverstärkte Polyesterformmassen und deren Verwendung.**

(30) Priorität: **17.07.79  CH 6631/79**

(43) Veröffentlichungstag der Anmeldung:
**21.01.81 Patentblatt 81/3**

(45) Bekanntmachung des Hinweises auf die Patenterteilung:
**18.05.83 Patentblatt 83/20**

(84) Benannte Vertragsstaaten:
**AT BE CH DE FR GB IT LI NL**

(56) Entgegenhaltungen:
**DE-B-1 221 323**
**FR-A-1 314 116**
**GB-A-1 039 897**
**US-A-4 075 180**

(73) Patentinhaber: **CIBA-GEIGY AG, Patentabteilung**
**Postfach, CH-4002 Basel (CH)**

(72) Erfinder: **Buxbaum, Lothar, Dr., Haus Litzelröder,**
**D-6145 Lindenfels/Odenwald (DE)**
Erfinder: **Breitenfellner, Franz, Dr., Im Entich 9a,**
**D-6140 Bensheim (DE)**

## Glasfaserverstärkte Polyesterformmassen und deren Verwendung

Glasfaserverstärkte Thermoplastenformmassen, insbesondere auf der Basis von Polyamiden und Polyestern, zählen heute zum Stand der Technik. Bezüglich der glasfaserverstärkten Polyester ist insbesondere auf die DE-OS Nr. 1921010 hinzuweisen, in der u.a. glasfaserverstärkte Polyester auf der Basis von Polyäthylenterephthalat (PETP), Poly-1,4-butylenterephthalat (PBTP) und Poly-1,4-cyclohexandimethylenterephthalat beschrieben werden.

Durch den Zusatz von Glasfasern zu thermoplastischen Polyestern wird eine Reihe von mechanischen und physikalischen Eigenschaften, wie z.B. Zugfestigkeit, E-Modul und die Wärmeformbeständigkeit, verbessert. Die Zähigheit, die Bruchdehnung sowie die Kriechstromfestigkeit erfahren jedoch eine deutliche Abnahme. Die Verschlechterung der Kriechstromfestigkeit bedeutet insbesondere deshalb einen besonders grossen Nachteil der glasfaserverstärkten thermoplastischen Polyesterformmassen des Standes der Technik, weil diese bekanntlich häufig Anwendung in der Elektroindustrie finden.

Die Aufgabe der Erfindung ist daher die Bereitstellung von glasfaserverstärkten, thermoplastischen Polyesterformmassen, welche neben befriedigenden Festigkeitseigenschaften und gutem thermischem Verhalten eine gute Kriechstromfestigkeit, insbesondere nach dem KB-Verfahren, (das zur Prüfung der Kriechstromfestigkeit nach DIN 53480 dient), aufweisen. Diese Formmassen sollen sich gleichzeitig auch durch gute Zähigkeitswerte auszeichnen.

Gegenstand der Erfindung sind glasfaserverstärkte, thermoplastische Polyesterformmassen, welche dadurch gekennzeichnet sind, dass sie aus einem Polyester, der zu mindestens 90 mol% ein Polyester aus Butandiol-(1,4) und trans-Cyclohexandicarbonsäure-(1,4) oder polyesterbildenden Derivaten davon ist, Glasfasern und gegebenenfalls üblichen Füll- und Zusatzstoffen bestehen.

Bevorzugt sind dabei solche erfindungsgemässe Formmassen, welche 40 bis 98 Gew.%, vorzugsweise 60 bis 90 Gew.%, Polyester, bezogen auf die Formmasse, aus trans-Cyclohexandicarbonsäure-(1,4) oder polyesterbildenden Derivaten davon und Butandiol-(1,4) und 2 bis 60 Gew.%, vorzugsweise 10 bis 40 Gew.%, Glasfasern, bezogen auf die Formmasse, enthalten.

Die erfindungsgemässen Formmassen können neben den Glasfasern zusätzlich auch noch andere übliche Füll- und Zusatzstoffe, wie beispielsweise Farbstoffe, anorganische und organische Pigmente, optische Aufheller, Mattierungsmittel, Entformungshilfs- und Gleitmittel, Stabilisatoren, Antioxidantien, Kristallisationspromotoren und flammhemmende Mittel, enthalten. Bevorzugt sind dabei solche erfindungsgemässe Formmassen, welche Flammschutzmittel in einer Konzentration von 5 bis 25 Gew.%, bezogen auf die Formmasse, enthalten.

Geeignete flammhemmende Mittel sind halogenhaltige organische Verbindungen, die allein oder zusammen mit Verbindungen der Elemente der fünften Hauptgruppe des Periodensystems, besonders Phosphorverbindungen und Antimontrioxid, verwendet werden können. Beispiele für flammhemmende Mittel sind Tetrafluor- und Tetrabromphthalsäureanhydrid, Tetra- oder Decabromdiphenyläther, Hexachlorbiphenyl, Decabrombiphenyl, N,N'-Äthylen-bis-tetrabromphthalimid und besonders bromiertes Polystyrol. Bevorzugte flammhemmende Mittel sind Antimontrioxid und Decabromdiphenyläther.

Die trans-Cyclohexandicarbonsäure-(1,4) und auch die erfindungsgemäss verwendeten Polyester sind bereits seit längerer Zeit bekannt. Diesbezüglich ist beispielsweise auf die Publikationen von H. Batzer und G. Fritz in „Makromolekulare Chem.", *11* (1953) 85-86 und *14* (1954) 179-232 hinzuweisen, wo Untersuchungen zur Faserbildung solcher Polyester beschrieben sind.

Durch die Anwesenheit eines Polyesters, der zu mindestens 90 mol% ein Polyester aus Butandiol-(1,4) und trans-Cyclohexandicarbonsäure-(1,4) oder polyesterbildenden Derivaten davon ist, erzielt man eine gute Kristallisationsfähigkeit des Endprodukt. Diese gute Kristallisationsfähigkeit wird durch die Mitverwendung von höchstens 10 mol% anderer Dicarbonsäure (bzw. Diole) bei der Herstellung der erfindungsgemäss zu verwendenden Polyester nicht oder nur unwesentlich beeinträchtigt.

Beispiele für geeignete Dicarbonsäuren sind: Azelainsäure, Bernsteinsäure, Dodecandicarbonsäure, cis-Cyclohexandicarbonsäure-(1,4), Terephthalsäure, Isophthalsäure.

Beispiele für geeignete Diole sind: Äthylenglykol, Hexandiol-(1,6), Octandiol-(1,8) oder Cyclohexan-1,4-dimethanol.

Die in den erfindungsgemässen Formmassen enthaltenen Polyester werden nach bekannten Verfahren durch Polykondensation aus den oben genannten Komponenten in Gegenwart von Katalysatoren hergestellt.

Die erfindungsgemässen Formmassen werden z.B. erhalten, indem man die Glasfasern und gegebenenfalls die weiteren Zusätze in der erforderlichen Menge vor oder während der Polykondensation oder bei der Aufarbeitung der Polyesterschmelze zumischt und im Polyester verteilt.

Vorzugsweise wird in der Weise gearbeitet, dass man zunächst den erhaltenen Polyester granuliert und trocknet und danach beispielsweise mit Hilfe eines Einschneckenextruders unter Schmelzen die Glasfasern einmischt. Dabei können gegebenenfalls weitere Zusätze ganz oder teilweise gleichzeitig bei diesem Mischprozess, aber auch in den Vorstufen, zugegeben werden.

Die erfindungsgemässen Formmassen sind wertvolle thermoplastische Materialien, aus denen sich nach den gebräuchlichen Formgebungsverfahren, wie Giessen, Spritzgiessen oder Extrusion, Formkörper verschiedener Art herstellen lassen.

Beispiele sind Profile und insbesondere technische Apparateteile. Bezüglich des Schmelzfliessverhaltens sind die Formmassen problemlos verarbeitbar.

Aufgrund der guten elektrischen Eigenschaften der erfindungsgemässen Formmassen, welche bei der Darlegung von Aufgabe der Erfindung und deren Lösung vorher bereits ausführlich beschrieben wurden, sind dieselben besonders zur Herstellung von geformten Gegenständen, die im Bereich der Elektroindustrie Anwendung finden, geeignet. Beispiele sind Apparateteile, wie Gehäuse und Schalter in Elektroartikeln, Bauteile für Elektronik- und Elektroanlagen allgemein und Teile für die Autoelektrik.

Die Verwendung dieser Formmassen als Werkstoff für die Herstellung von Artikeln für Anwendungen in der Elektrotechnik und Elektronik ist ein weiterer Gegenstand der vorliegenden Erfindung.

Die Erfindung wird anhand der folgenden Beispiele näher erläutert.

*Beispiel 1:*

In einen mit Rührer, Stickstoffeinlass, Trennkolonne und Temperaturmessung versehenen 10-l-Stahlreaktor werden 4005 g trans-Cyclohexandicarbonsäure-(1,4)-dimethylester, 3600 g Butandiol-(1,4) und 2,4 g Titantetraisopropylat als Katalysator eingefüllt, und das Gemisch wird auf 140° C erhitzt. Unter Rühren und Stickstoffeinleiten werden innerhalb von 2,5 h 97% der theoretisch zu erwartenden Menge an Methanol abdestilliert, wobei die Temperatur des Reaktionsgemisches auf 215° C ansteigt.

Das so erhaltene Umesterungsgemisch wird in einen zweiten Reaktor umgefüllt, und nach Erhitzen des Reaktionsgemisches auf 245° C wird innerhalb ½ h ein Vakuum von ca. 120 mbar mit einer Wasserstrahlpumpe angelegt. Unter langsamer Erhöhung der Reaktionstemperatur auf 250° C wird das Vakuum mit einer Vakuumpumpe innerhalb von 45 min auf 0,5 mbar und dann noch weiter bis auf 0,15 mbar erhöht. Bei gleichbleibender Reaktionstemperatur wird 5 h und 15 min weiterkondensiert, worauf man den Reaktor entleert. Die Schmelze wird in Form eines Stranges durch ein Wasserbad abgekühlt und granuliert.

Der Polyester hat eine Grenzviskosität von 134 cm³/g. Die für die Bestimmung derselben erforderliche relative Viskosität wird an Lösungen von 1 g Polyester in 100 ml eines aus gleichen Teilen Phenol und symmetrischem Tetrachloräthan bestehenden Lösungsmittels bei 30° C bestimmt. Der Polyester enthält 94 mol% trans- und 6 mol% cis-Cyclohexandicarbonsäure-(1,4)-Einheiten (bestimmt durch $^{13}$C-NMR).

70,0 Gew.% dieses Polyesters, bezogen auf die Formmasse, werden nach dem Trocknen mit Hilfe eines Einschneckenextruders bei Zylindertemperaturen von 200° C mit 30 Gew.% Glasfasern, bezogen auf die Formmasse, verstärkt, anschliessend gekühlt und granuliert. Nach dem Trocknen wird das Granulat durch das Spritzgiessverfahren zu Formkörpern (Normkleinstäben, Schulterstäben und Platten) verarbeitet. Die Zylindertemperaturen betragen dabei 200° C, die Werkzeugtemperaturen 80° C und die Zykluszeit 40 s.

An den Formkörpern werden die in der Tabelle angeführten Eigenschaften gemessen. Die Kriechstromfestigkeit wird sowohl nach dem KB- als auch nach dem KC-Verfahren gemessen (DIN 53480). Dabei wird zwischen zwei auf die Probe aufgesetzte und unter Wechselspannung stehende Elektroden eine elektrisch leitende Prüflösung aufgetropft. Beim KB-Verfahren wird festgestellt, welche höchste Spannung bis zur 50. Auftropfung keinen Kriechweg verursacht. Beim KC-Verfahren wird festgestellt, nach wieviel Auftropfungen (höchstens jedoch 100) mit verschiedenen Spannungen (höchstens jedoch 600 V) ein Kriechweg entsteht. Man erkennt daraus, dass die erfindungsgemässen Formkörper eine hohe Kriechstromfestigkeit, kombiniert mit hoher Bruchdehnung und Zähigkeit bei befriedigenden Festigkeitseigenschaften aufweisen. Die Grenzviskosität der Formteile beträgt 128 cm³/g.

*Vergleichsbeispiele 1/2*

Unter vergleichbaren Verarbeitungsbedingungen werden Produkte aus glasfaserverstärktem PETP und PBTP zu Formkörpern verarbeitet.

Die Verarbeitungsbedingungen betragen:

| für PBTP | Zylindertemperaturen | 240° C |
|---|---|---|
| | Werkzeugtemperatur | 80° C |
| | Zykluszeit | 40 s |
| für PETP | Zylindertemperaturen | 275° C |
| | Werkzeugtemperatur | 140° C |
| | Zykluszeit | 40 s |

*Beispiele 2 und 3*

Der in Beispiel 1 hergestellte Polyester wird zusammen mit den Glasfasern in verschiedenen Konzentrationen analog Beispiel 1 verarbeitet.

Die Grenzviskosität der erhaltenen Formteile beträgt:

Beispiel 2:      120 cm³/g
Beispiel 3:      115 cm³/g

An den Formkörpern werden die in der Tabelle 1 angeführten Eigenschaften gemessen. Mann erkennt daraus, dass die erfindungsgemässen Produkte sich durch eine hohe Kriechstromfestigkeit sowie durch eine hohe Verformbarkeit bis zu Bruch auszeichnen.

Tabelle 1

| Beispiel | Zusammensetzung | Kriechstromfestigkeit DIN 53480 | | Schlagzähigkeit DIN 53453 (kJ/m²) | Kerbschlagzähigkeit DIN 53453 (kJ/m²) | E-Modul DIN 53457 (N/mm²) | Zugfestigkeit DIN 53455 (N/mm²) | Bruchdehnung DIN 53455 (%) |
|---|---|---|---|---|---|---|---|---|
| | | Verfahren KB | KC | | | | | |
| 1 | 70,0 Gew.%*) Polyester, hergestellt gemäss Beispiel 1, Abs. 1 und 2. 30,0 Gew.% Glasfasern | 525 | >600 | 47 | 21 | 5 500 | 90 | 6,8 |
| Vergleichsbeispiel 1 | 70,0 Gew.% PBTP-Homo-Polyester. 30,0 Gew.% Glasfasern | 175 | 300 | 40 | 10 | 8 500 | 130 | 2,5 |
| Vergleichsbeispiel 2 | 70,0 Gew.% PETP-Homo-Polyester. 30,0 Gew.% Glasfasern | 150 | 250 | 30 | 10 | 11 000 | 155 | 2,5 |
| 2 | 90,0 Gew.% Polyester, hergestellt gemäss Beispiel 1, Abs. 1 und 2. 10,0 Gew.% Glasfasern | >600 | >600 | — | — | 2 700 | 55 | 7,5 |
| 3 | 60,0 Gew.%* Polyester, hergestellt gemäss Beispiel 1, Abs. 1 und 2. 40,0 Gew.% Glasfasern | 525 | >600 | — | — | 6 500 | 100 | 6,5 |

* Die Gewichtsprozente sind jeweils auf die Formmasse bezogen.

*Beispiel 4:*

Man geht analog wie im Beispiel 1 vor, fügt jedoch der Formmasse als Flammschutzmittel Decabromdiphenyläther und $Sb_2O_3$ zu.

Die Grenzviskosität der Formteile beträgt 110 cm³/g.

Die Prüfwerte sind in der Tabelle 2 zusammengefasst.

*(Tabelle auf der nächsten Seite)*

## Patentansprüche

1. Glasfaserverstärkte, thermoplastische Polyesterformmassen, dadurch gekennzeichnet, dass sie aus einem Polyester, der zu mindestens 90 mol/% ein Polyester aus Butandiol-(1,4) und trans-Cyclohexandicarbonsäure-(1,4) oder polyesterbildenden Derivaten davon ist, Glasfasern und gegebenenfalls anderen üblichen Füll- und Zusatzstoffen bestehen.

2. Formmassen nach dem Anspruch 1, dadurch gekennzeichnet, dass dieselben 40 bis 98 Gew.% Polyester, bezogen auf die Formmasse, der zu mindestens 90 mol% ein Polyester aus Butandiol-(1,4) und trans-Cyclohexandicarbonsäure-(1,4) oder polyesterbildenden Derivaten davon ist, und 2 bis 60 Gew.% Glasfasern, bezogen auf die Formmasse, enthalten.

3. Formmassen nach dem Anspruch 2, dadurch gekennzeichnet, dass dieselben 60 bis 90 Gew.% Polyester, bezogen auf die Formmasse, der zu mindestens 90 mol% ein Polyester aus Butandiol-(1,4) oder polyesterbildenden Derivaten davon ist, und 10 bis 40 Gew.% Glasfasern, bezogen auf die Formmasse, enthalten.

4. Formmassen nach den Ansprüchen 1 bis 3, dadurch gekennzeichnet, dass dieselben Flammschutzmittel in einer Konzentration von 5 bis 25 Gew.%, bezogen auf die Formmasse, enthalten.

Tabelle 2

| Bei-spiel | Zusammen-setzung | Kriechstrom-festigkeit DIN 53 480 | | Schlag-zähigkeit DIN 53 453 (kJ/m²) | Kerb-schlag-zähigkeit DIN 53 453 (kJ/m²) | E-Modul DIN 53 457 (N/mm²) | Zug-festigkeit DIN 53 455 (N/mm²) | Bruch-dehnung DIN 53 455 (%) | Brenn-barkeit UL-94** 1,6 mm Proben-dicke |
|---|---|---|---|---|---|---|---|---|---|
| | | Verfahren KB | KC | | | | | | |
| 4 | 56,5 Gew.%* Polyester, her-gestellt nach Beispiel 4<br>30,0 Gew.% Glasfasern<br>9,0 Gew.% Decabromdi-phenyloxid<br>4,5 Gew.% Sb₂O₃ | 250 | >600 | 33 | 14 | 5 200 | 81 | 4,2 | V-O |

* Die Gewichtsprozente sind jeweils auf die Formmasse bezogen.
** Eine Prüfnorm der Underwriter Laboratories.

5. Verwendung von Formmassen nach den Ansprüchen 1 bis 4 als Werkstoff für die Herstellung von Artikeln für Anwendungen in der Elektrotechnik und Elektronik.

## Claims

1. A glass-reinforced thermoplastic polyester moulding compound comprising a polyester that is at least 90 mol% a polyester of 1,4-butanediol and trans-1,4-cyclohexanedicarboxylic acid or polyester forming derivatives thereof, and optionally other conventional fillers and additives.

2. A moulding compound according to claim 1, which contains 40 to 98% by weight, based on said moulding compound, of a polyester which is at least 90 mol% a polyester of 1,4-butanediol and trans-1,4-cyclohexanedicarboxylic acid or polyester forming derivatives thereof, and 2 to 60% by weight of glass fibres, based on said moulding compound.

3. A moulding compound according to claim 2, which contains 60 to 90% by weight, based on said moulding compound, of a polyester that is at least 90 mol% a polyester of 1,4-butanediol and trans-1,4-cyclohexanedicarboxylic acid or polyester forming derivatives thereof, and 10 to 40% by weight of glass fibres, based on said moulding compound.

4. A moulding compound according to any one of claims 1 to 3, which contains flame retardants in a concentration of 5 to 25% by weight, based on said moulding compound.

5. Use of a moulding compound according to any one of claims 1 to 4 as material for the production of articles having utilities in the fields of electrical engineering and electronics.

## Revendications

1. Matières à mouler thermoplastiques en polyesters renforcées par des fibres de verre, caractérisées en ce qu'elles contiennent un polyester constitué pour au moins 90% en moles d'un polyester dérivant du butanediol-1,4 et de l'acide cyclohexanedicarboxylique-1,4-trans, ou de dérivés de ceux-ci générateurs de polyesters, des fibres de verre et, éventuellement, d'autres charges et additifs usuels.

2. Matières à mouler selon la revendication 1, caractérisées en ce qu'elles contiennent de 40 à 98% en poids d'un polyester qui est, pour au moins 90% en moles, un polyester dérivant du butanediol-1,4 et de l'acide cyclohexanedicarboxylique-1,4-trans, ou de dérivés de ceux-ci générateurs de polyesters, et de 2 à 60% en poids de fibres de verre, les pourcentages pondéraux étant à chaque fois rapportés à la matière à mouler.

3. Matières à mouler selon la revendication 2, caractérisées en ce qu'elles contiennent de 60 à 90% en poids d'un polyester qui est, pour au moins 90% en moles, un polyester dérivant du butanediol-1,4 et de l'acide cyclohexanedicarboxylique-1,4-trans, ou de dérivés de ceux-ci générateurs de polyesters, et de 10 à 40% en poids de fibres de verre, les pourcentages pondéraux étant à chaque fois rapportés à la matière à mouler.

4. Matières à mouler selon l'une quelconque des revendications 1 à 3, caractérisées en ce qu'elles contiennent des ignifugeants en une concentration de 5 à 25% en poids par rapport à la matière à mouler.

5. Application de matières à mouler selon l'une quelconque des revendications 1 à 4 comme matériaux pour la fabrication d'articles devant être utilisés en électrotechnique et en électronique.